# EUROPEAN PATENT APPLICATION

(11) **EP 3 965 493 A1**
(43) Date of publication of application: **09.03.2022**
(21) Application number: 19933007.7
(22) Date of filing: 10.06.2019
(51) Int. Cl.: H04W 72/04

(54) **CSI REPORTING METHOD AND TERMINAL DEVICE**

(71) Applicant: GUANGDONG OPPO MOBILE TELECOMMUNICATIONS CORP., LTD., Dongguan, Guangdong 523860 (CN)
(72) Inventor: CHEN, Wenhong, Dongguan, Guangdong 523860 (CN); FANG, Yun, Dongguan, Guangdong 523860 (CN)
(74) Representative: Taor, Simon Edward William
(86) International application number: PCT/CN2019/090582
(87) International publication number: WO 2020/248101

(57) **Abstract**

Provided are a CSI reporting method and a terminal device, wherein same can realize effective reporting of CSI in a multi-TRP scenario. The method comprises: a terminal device acquiring a first CSI-associated control resource set (CORESET) group index; and the terminal device processing first CSI according to the first CSI-associated CORESET group index.

## Description

### TECHNICAL FIELD

The embodiments of the present application relate to the field of communications, and more specifically, to a CSI reporting method and terminal device.

### BACKGROUND

The New Radio (NR) system supports downlink and uplink non-coherent transmission based on multiple Transmission/Reception Points (TRPs). When a terminal device reports Channel State Information (CSI), it cannot effectively report the CSI because it cannot determine which TRP corresponds to the CSI.

### SUMMARY

The present application provides a CSI reporting method and terminal device, which can realize effective reporting of CSI in a multi-TRP scenario.

In a first aspect, a method for reporting CSI is provided, including: obtaining, by a terminal device, a Control Resource Set (CORESET) pool index associated with first CSI; and processing the first CSI by the terminal device according to the CORESET pool index associated with the first CSI.

In a second aspect, a terminal device is provided, and the terminal device can perform the method in the foregoing first aspect or any optional implementation of the first aspect. Specifically, the terminal device can include functional modules for performing the method in the foregoing first aspect or any possible implementation of the first aspect.

In a third aspect, there is provided a terminal device including a processor and a memory. The memory is configured to store a computer program, and the processor is configured to call and run the computer program stored in the memory to perform the method in the above-mentioned first aspect or any possible implementation of the first aspect.

In a fourth aspect, a device for reporting CSI is provided, including a processor. The processor is configured to call and run a computer program from a memory, to cause an apparatus installed with the communication device to perform the method in the above-mentioned first aspect or any possible implementation of the first aspect.

Optionally, the device is a chip.

In a fifth aspect, there is provided a computer-readable storage medium for storing a computer program that causes a computer to perform the method in the above-mentioned first aspect or any possible implementation of the first aspect.

In a sixth aspect, a computer program product is provided, including computer program instructions that cause a computer to perform the method in the foregoing first aspect or any possible implementation of the first aspect.

In a seventh aspect, there is provided a computer program which, when running on a computer, causes the computer to perform the method in the first aspect or any possible implementation of the first aspect.

Based on the above technical solutions, the CSI is associated with the CORESET pool index, and the CSIs corresponding to different TRPs can be distinguished through the CORESET pool indices, so that CSI reporting can be effectively performed.

### BRIEF DESCRIPTION OF THE DRAWINGS

FIG. 1 is a schematic diagram of a possible wireless communication system to which an embodiment of the present application is applied.
FIGS. 2(a) and 2(b) are schematic diagrams of downlink non-coherent transmission according to an embodiment of the present application.
FIGS. 3(a) and Fig. 3(b) are schematic diagrams of uplink non-coherent transmission according to an embodiment of the present application.
FIGS. 4(a) and 4(b) are schematic diagrams of multi-panel based PUSCH and PUCCH transmission according to an embodiment of the present application, respectively.
FIG. 5 is a schematic diagram of an uplink beam management process according to an embodiment of the present application.
FIG. 6 is a schematic flowchart of a method for reporting CSI according to an embodiment of the present application.
FIG. 7 is a possible implementation of the method shown in FIG. 6.
FIG. 8 is another possible implementation of the method shown in FIG. 6.
FIG. 9 is a schematic block diagram of a terminal device according to an embodiment of the present application.
FIG. 10 is a schematic structural diagram of a terminal device according to an embodiment of the present application.
FIG. 11 is a schematic structural diagram of an apparatus for reporting CSI according to an embodiment of the present application.

### DETAILED DESCRIPTION

The technical solutions in the embodiments of the present application will be described below in conjunction with the accompanying drawings.

The technical solutions of the embodiments of the present disclosure can be applied to various communication systems, such as a Global System of Mobile Communication (GSM) system, a Code Division Multiple Access (CDMA) system, a Wideband Code Division Multiple Access (WCDMA) system, a Long Term Evolution (LTE) system, a LTE Frequency Division Duplex (FDD) system, a LTE Time Division Duplex (TDD) system, an Advanced long term evolution (LTE-A) system, a NEW Radio (NR) system, an evolution system of a NR system, a LTE-based access to unlicensed spectrum (LTE-U) system, a NR-based access to unlicensed spectrum (NR-U) system, an Universal Mobile Telecommunication System (UMTS), Wireless Local Area Networks (WLAN), Wireless Fidelity (Wi-Fi), future 5G systems, or other communication systems.

Generally speaking, traditional communication systems support a limited number of connections and are easy to implement. However, with the development of communication technologies, mobile communication systems will not only support traditional communications, but will also support, for example, Device to Device (D2D) communication, machine to machine (M2M) communication, machine type communication (MTC), vehicle to vehicle (V2V) communication, etc. The embodiments of the present application can also be applied to these communication systems.

Optionally, the communication systems in the embodiments of the present application may be applied to a Carrier Aggregation (CA) scenario, a Dual Connectivity (DC) scenario, a standalone (SA) network deployment scenario, or the like.

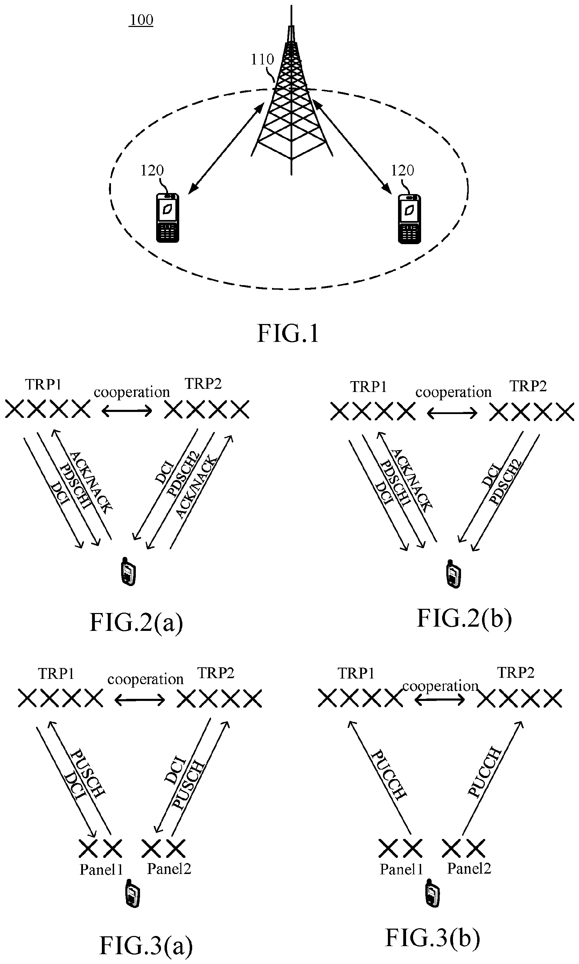

Exemplarily, a communication system to which the embodiments of the present disclosure are applied is as shown in FIG. 1. The communication system 100 may include a network device 110 which may be a device that communicates with a terminal device 120 (or referred to as a communication terminal or a terminal). The network device 110 can provide communication coverage for a specific geographic area, and can communicate with terminal devices located in the coverage area.

Optionally, the network device 110 may be a Base Transceiver Station (BTS) in a GSM system or a CDMA system, a NodeB (NB) in a WCDMA system, an Evolutional Node B (eNB or eNodeB) in an LTE system, or a wireless controller in a Cloud Radio Access Network (CRAN), or the network device can be a mobile switching center, a relay station, an access point, a vehicle-mounted device, a wearable device, a hub, a switch, a bridge, a router, a network side device in a 5G network, a network device in a future evolutional Public Land Mobile Network (PLMN), or the like.

The wireless communication system 100 also includes at least one terminal device 120 located within the coverage area of the network device 110. The terminal device 120 may be mobile or fixed. Optionally, the terminal device 120 may refer to user equipment, an access terminal, a user unit, a user station, a mobile station, a remote station, a remote terminal, a mobile device, a user terminal, a terminal, a wireless communication device, a user agent, or a user device. The terminal device can also be a cellular phone, a cordless phone, a Session Initiation Protocol (SIP) phone, a Wireless Local Loop (WLL) station, a personal digital assistant (PDA), a handheld device with wireless communication function, a computing device or other processing devices connected to a wireless modem, an in-vehicle device, a wearable device, a terminal devices in the future 5G network, a terminal device future evolutional Public Land Mobile Network (PLMN), or the like, which are not limited in the embodiments of the present application. Optionally, Device to Device (D2D) communication may also be performed between the terminal devices 120.

The network device 110 can provide services for a cell, and the terminal device 120 communicates with the network device 110 through transmission resources, for example, frequency domain resources or spectrum resources, used by the cell. The cell may be a cell corresponding to the network device 110, and the cell may belong to a macro base station or a base station corresponding to a small cell. The small cell herein can include a Metro cell, a Micro cell, a Pico cell, a Femto cell, etc., which are characterized in small coverage and low transmission power, and are suitable for providing high-rate data transmission services.

FIG. 1 exemplarily shows one network device and two terminal devices, but the present application is not limited to this. The wireless communication system 100 may include multiple network devices, and the coverage of each network device may include other numbers of terminal devices. In addition, the wireless communication system 100 may also include other network entities such as a network controller and a mobility management entity.

In the NR system, the downlink and uplink non-coherent transmission based on multiple TRPs is introduced. A backhaul connection between the TRPs may be ideal or non-ideal. In an ideal backhaul, the TRPs can exchange information quickly and dynamically. In a non-ideal backhaul, the TRPs can only exchange information quasi-statically due to the large delay.

In the downlink non-coherent transmission, multiple TRPs can use different control channels to separately schedule Physical Downlink Shared Channel (PDSCH) transmissions of a terminal device, and the scheduled PDSCHs can be transmitted in the same slot or in different slots. The terminal device needs to support simultaneous reception of Physical Downlink Control Channels (PDCCHs) and PDSCHs from different TRPs. When the terminal device feeds back Acknowledge/Negative Acknowledge (ACK/NACK), as shown in FIG. 2(a), the respective ACKs/NACKs can be fed back to different TRPs that transmit the respective PDSCHs. As shown in FIG. 2(b), the respective ACKs/NACKs can also be combined and reported to one TRP. The former can be used in both ideal backhaul and non-ideal backhaul scenarios, and the latter can only be used in ideal backhaul scenarios. The DCIs that are used for scheduling PDSCHs and transmitted by different TRPs can be carried by different Control Resource Sets (CORESETs), that is, the network side configures multiple CORESETs, and each TRP uses its own CORESET for scheduling, that is, different TRPs can be distinguished through the CORESETs.

Similarly, in uplink non-coherent transmission, different TRPs can also separately schedule Physical Uplink Shared Channel (PUSCH) transmissions of the same terminal device. Different PUSCH transmissions can be configured with independent transmission parameters, such as a beam, a pre-coding matrix, the number of layers, and so on. The scheduled PUSCH transmissions can be transmitted in the same slot or in different slots. If the terminal device is scheduled for two PUSCH transmissions in the same slot at the same time, it needs to determine how to perform the transmissions according to its own capabilities. If the terminal device is configured with multiple antenna panels and supports simultaneous transmission of PUSCHs on multiple panels, these two PUSCHs can be transmitted at the same time, and the PUSCHs transmitted on different panels are aligned with the corresponding TRPs for analog beam-forming, so that different PUSCHs are distinguished through the spatial domain, providing uplink spectral efficiency, as shown in FIG. 3(a). If the terminal device has only a single panel, or does not support simultaneous transmission on multiple panels, it can only transmit the PUSCH on one panel, as shown in FIG. 3(b). The Download Control Information (DCI), used for scheduling the PUSCHs, transmitted by different TRPs can be carried by different CORESETs, that is, the network side configures multiple CORESETs, and each TRP uses its own CORESET for scheduling.

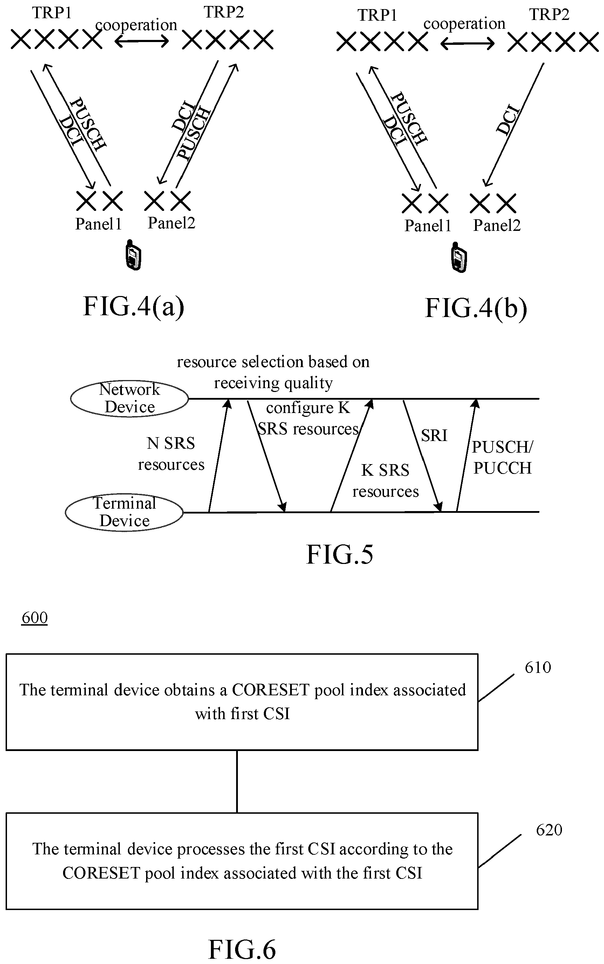

The terminal device can have multiple antenna panels for uplink transmission. A panel includes a set of physical antennas, and each panel has an independent radio frequency channel. The terminal device needs to notify the network side of the number of configured antenna panels in a capability report. At the same time, the terminal device may also need to notify the network side whether it has the capability of simultaneously transmitting signals on multiple antenna panels. Since channel conditions corresponding to different panels are different, different panels need to adopt different transmission parameters according to their respective channel information. In order to obtain these transmission parameters, different SRS resources need to be configured for different panels so as to obtain uplink channel information. For example, in order to perform uplink beam management, one SRS resource set can be configured for each panel, so that the beam management is performed separately for each panel to determine an independent analog beam. As shown in FIG. 4(a), in order to obtain precoding information used for PUSCH transmission, an SRS resource set can also be configured for each panel to obtain the transmission parameters such as a beam, a precoding vector, and the number of transmission layers used for the PUSCH transmitted on the panel. At the same time, as shown in FIG. 4(b), multi-panel transmission can also be applied to PUCCH, that is, the information carried by the same ACK/NACK feedback resource or by the ACK/NACK feedback resource on the same time domain resource can be sent to the network side simultaneously through different panels.

When the terminal device feeds back the CSI, it needs to feedback the CSI corresponding to each TRP. The content included in the CSI may include, for example, Rank Indication (RI), a Precoding Matrix Indicator (PMI), a Channel Quality Indicator (CQI), etc., which can be used for each TRP to perform downlink transmission scheduling. Since the terminal device cannot determine which TRP corresponds to the CSI, when a resource conflict occurs between the CSI and another uplink channel such as CSI, ACK/NACK, PUSCH and other uplink channels, it cannot determine whether the CSI and the conflicting channel correspond to the same TRP, and thus the terminal device cannot adopt an appropriate conflict resolution method. Therefore, in this case, the terminal device cannot effectively report the CSI.

The embodiments of the present application propose a method for CSI reporting, in which the CSI is associated with a CORESET pool index, and the CSIs corresponding to different TRPs can be distinguished through the CORESET pool indices, so that the CSI reporting can be carried out effectively, and each TRP obtains its corresponding CSI. In addition, when resource conflicts occur between the CSI and other uplink channels, the terminal device can adopt a suitable conflict resolution method, thereby realizing effective transmission of the CSI and the other uplink channels.

In addition, in the NR system, the terminal device can use analog beams to transmit uplink data and uplink control information. The terminal device may perform uplink beam management based on a Sounding Reference Signal (SRS), thereby determining the analog beams used for the uplink transmission. As shown in the process of uplink beam management in FIG. 5, the network side can configure a SRS resource set 1 for the terminal device, and the SRS resource set 1 includes N SRS resources (N>1). The terminal device may use different beams to transmit the N SRS resources, and the network side measures the reception quality of the N SRS resources respectively, and selects K SRS resources with the best reception quality therefrom. The network side can also configure a SRS resource set 2 that includes K SRS resources, and can instruct the terminal to use the analog beams used by the K SRS resources selected from the SRS resource set 1 to transmit the SRS resources in the SRS resource set 2. This can be achieved by configuring the K SRS resources selected from the SRS resource set 1 as reference SRS resources for the K SRS resources in the SRS resource set 2, respectively. In this case, based on the SRSs transmitted by the terminal device in the SRS resource set 2, the network side can select an SRS resource with the best reception quality, and notify the terminal of the corresponding uplink Scheduling Request Indication (SRI). After receiving the SRI, the terminal device determines the analog beam used by the SRS resource indicated by the SRI as the analog beam that should be used to transmit the PUSCH. For PUSCH, the SRI can be indicated through a SRI indication field in the DCI.

For a Physical Uplink Control Channel (PUCCH), a similar method can also be used to indicate the beam used. Specifically, for each PUCCH resource, multiple pieces of PUCCH spatial relation information (PUCCH-spatialrelationinfo) are configured in Radio Resource Control (RRC) signaling, and the PUCCH-spatialrelationinfo currently used is indicated through Medium Access Control (MAC) layer signaling. Each PUCCH-spatialrelationinfo includes a reference signal for determining a transmission beam of the PUCCH. For each SRS resource, corresponding SRS spatial relation information (SRS-spatialrelationinfo) can also be configured through the RRC signaling, which includes a reference signal used for determining the transmission beam of the SRS.

The method for reporting CSI according to an embodiment of the present application will be described in detail below with reference to FIG. 6.

FIG. 6 is a schematic flowchart of a method for reporting CSI according to an embodiment of the present application. The method 600 can be performed by a terminal device, and the terminal device may be, for example, the terminal device 120 shown in FIG. 1. The method 600 may include some or all of the following contents.

In 610, the terminal device obtains a CORESET pool index associated with first CSI.

In 620, the terminal device processes the first CSI according to the CORESET pool index associated with the first CSI.

Optionally, in 610, the terminal device obtaining the CORESET pool index associated with the first CSI includes that the terminal device receives configuration information of the first CSI, where the configuration information of the first CSI includes the CORESET pool index associated with the first CSI.

The CORESET pool index may be configured by the network device through high-level signaling.

For example, the CSI configuration information corresponding to the first CSI includes parameters of the CORESET pool index, which are used to indicate the CSI configuration and the CORESET pool index associated with the first CSI. The CSI configuration information may be obtained from a RRC parameter of CSI report configuration (CSI-Report -config).

In a possible implementation, the terminal device obtains the index associated with the first CSI through the CSI configuration information of the first CSI, and the index associated with the first CSI may not need to be associated with a CORESET or a CORESET pool, that is, the first CSI index is used for the terminal device to determine how to process the first CSI, and it needs not to be obtained from the CORESET or bounded with the CORESET. In such cases, the index may also be referred to as a CSI index or a CSI progress index.

In another possible implementation, the index can also reuse the CORESET pool indices configured by the network device for different CORESETs through high-level signaling. For example, the CORESET pool index configured for the first CSI may use the same parameter definition as and an independent value from the CORESET pool index configured for the CORESET by the network device. The network device can configure the corresponding CORESET pool indices for different CORESETs through high-level signaling. For example, in the RRC configuration parameters used to configure the CORESET, such as a RRC parameter of a Control Resource Set (ControlResourceSet), an index is configured for each CORESET, which is temporarily referred to as the CORESET pool index in the embodiments of the present application.

The network device can configure multiple CORESETs, and different TRPs use their corresponding CORESETs to perform scheduling of the terminal device. Therefore, the CORESETs can be used to distinguish different TRPs. In this embodiment, the CSI is associated with the CORESET pool index, and the CSIs corresponding to different TRPs are distinguished through the CORESET pool index, and thus effective CSI reporting can be realized.

For example, when the terminal device determines that the first CSI needs to be reported, it may report the first CSI to the corresponding TRP. The CORESET pool index associated with the first CSI may adopt the same value as the CORESET pool index used by the TRP for scheduling the CORESET of the terminal device.

The CORESET pool indices configured by the network device for different CORESETs can be the same or different. For example, the value of the CORESET pool index is 0 or 1, which can be indicated by 1-bit signaling. Optionally, the CORESETs configured with the same index may be referred to as a CORESET pool.

In another possible implementation, the CORESET pool index associated with the first CSI and the CORESET pool index configured by the network device for each CORESET may be two independent sets of parameters. The two sets of independent CORESET pool index values can be configured independently.

That is to say, in the embodiments of the present application, the index associated with the first CSI may be another set of indexes not related to the CORESET, or may reuse the CORESET pool index of the CORESET used by the TRP, or may be another set of CORESET pool index that is relatively independent of the CORESET pool index used by the TRP for the CORESET, which is not limited here. When the network device configures the associated indices for different CSIs, it only requires that the TRPs corresponding to the respective CSIs can be distinguished through the indices associated with the respective CSIs.

The first CSI may be periodic CSI, quasi-persistent CSI, or aperiodic CSI, which is not limited in the present application.

When the first CSI is a non-periodically transmitted CSI, optionally, the CORESET pool index associated with the first CSI may be a CORESET pool index of a CORESET where the DCI that triggers reporting of the first CSI is located (in this case, the index associated with the first CSI reuses the CORESET pool index configured by the network device for the CORESET). Or, the CORESET pool index associated with the first CSI may use the same value as the CORESET pool index of the CORESET where the DCI that triggers reporting of the first CSI is located (in this case, the index associated with the first CSI and the CORESET pool index of the CORESET where the DCI is located are two sets of CORESET indices configured independently). That is, the TRP that schedules reporting of the first CSI and the TRP corresponding to the first CSI should be the same TRP.

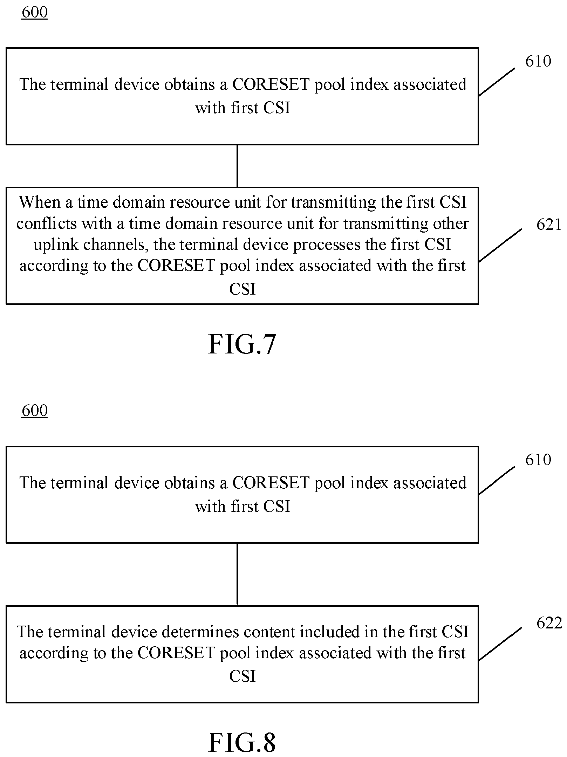

In 620, the processing on the first CSI includes two aspects of processing. On the one hand, the CSI is processed when resource conflicts occur between the first CSI and other uplink channels, and on the other hand, the content of the first CSI to be reported is determined. The processing of these two aspects will be described below with reference to FIG. 7 and FIG. 8 respectively.

FIG. 7 shows a possible implementation of the method shown in FIG. 6. 620 may include 621. As shown in FIG. 7, the method includes the following.

In 610, the terminal device obtains a CORESET pool index associated with first CSI.

In 621, when a time domain resource unit for transmitting the first CSI conflicts with a time domain resource unit for transmitting another uplink channel, the terminal device processes the first CSI according to the CORESET pool index associated with the first CSI.

For example, when the time domain resource unit for transmitting the first CSI conflicts with the time domain resource unit for transmitting the other uplink channel, the terminal device reports or discards the first CSI, or multiplex the first CSI and the uplink channel and then transmit the same, according to the CORESET pool index associated with the first CSI.

The terminal device determines the time domain resource unit for transmitting the first CSI and the time domain resource unit for transmitting the other uplink channels according to the scheduling by the network device or received configuration information. If the first CSI and the uplink channel are transmitted in the same time domain resource unit, it is determined that a resource conflict occurs, and it is necessary to determine how to perform signal transmission according to a certain processing method.

The time domain resource unit may be a slot, a mini-slot, or an Orthogonal Frequency Division Multiplexing (OFDM) symbol, or the like. The mini-slot is composed of multiple OFDM symbols in the same slot.

For example, the time domain resource unit is an OFDM symbol, and if both the first CSI and the uplink channel are transmitted in the symbol, it is determined that a resource conflict occurs.

For another example, when the time domain resource unit is a slot, if both the first CSI and the uplink channel are transmitted in the slot, no matter the first CSI and the uplink channel can be transmitted in different symbols or the same symbol in the slot, it is determined that a resource conflict occurs.

When the time domain resource unit for transmitting the first CSI conflicts with the time domain resource unit for transmitting the other uplink channels, the following methods can be used to resolve the conflict.

### Method 1

If the CORESET pool index associated with the first CSI is the same as the CORESET pool index associated with the uplink channel, the terminal device multiplexes the first CSI with the uplink channel for transmission.

The CORESET pool index associated with the uplink channel may be agreed upon in advance or may be configured by the network device. For example, if the uplink channel is a PUSCH, its associated CORESET pool index may be the CORESET pool index of the CORESET where the DCI that schedules the PUSCH is located; if the uplink channel is a PUCCH carrying HARQ-ACK information, its associated CORESET pool index may be the CORESET pool index of the CORESET where the DCI that schedules the PDSCH corresponding to the HARQ-ACK is located; and if the uplink channel is a PUCCH or PUSCH carrying another CSI, the CORESET pool index associated with the other CSI can be determined by the aforementioned method for determining the CORESET pool index associated with the first CSI.

In this embodiment, when the time domain resource unit for transmitting the first CSI conflicts with the time domain resource unit for transmitting the other uplink channel, if the CORESET pool index associated with the first CSI is the same as the CORESET pool index associated with the uplink channel, the terminal device multiplex the first CSI with the uplink channel for transmission. In this way, when the first CSI and the uplink channel correspond to the same TRP, signal multiplexing can prevent these signals from being discarded, thereby improving the data transmission performance of the device.

For example, the terminal device may cascade the first CSI with the information carried by the uplink channel, and then transmit them on the same PUCCH or the same PUSCH. The first CSI and the information carried by the uplink channel can be encoded independently. The same PUCCH or the same PUSCH may be the uplink channel.

For another example, the terminal device performs joint coding on the first CSI and the information carried by the uplink channel, and then transmits them on the same PUCCH or the same PUSCH. The same PUCCH or the same PUSCH may be the uplink channel.

### Method 2

If the CORESET pool index associated with the first CSI is different from the CORESET pool index associated with the uplink channel, the terminal device sends the first CSI on the time domain resource unit when a priority of the first CSI is higher than a priority of the uplink channel, or discards the first CSI when the priority of the first CSI is lower than the priority of the uplink channel.

In this embodiment, when the time domain resource unit for transmitting the first CSI conflicts with the time domain resource unit for transmitting the other uplink channel, if the CORESET pool index associated with the first CSI is different from the CORESET pool index associated with the uplink channel, the terminal device determines whether to discard the first CSI or discard the uplink channel, or determines whether to transmit the first CSI or transmit the uplink channel on the conflicting time domain resource unit, based on the priority information of the first CSI and the uplink channel. Therefore, when the first CSI and the uplink channel correspond to different TRPs, the transmission of the signal with higher priority is guaranteed.

The priority information may be agreed upon in advance by the terminal device and the network device, for example, specified in a protocol; or the priority information may be configured by the network device.

The priority information may include at least one of the following, for example:
1) when the uplink channel is a physical uplink control channel (PUCCH) that carries the hybrid automatic repeat request acknowledge (HARQ-ACK) information, the priority of the first CSI is lower than the priority of the PUCCH, and
2) when the uplink channel is a physical uplink control channel (PUSCH) carrying data, the priorities of the first CSI and the PUSCH are determined according to the CORESET pool index associated with the first CSI and the CORESET pool index associated with the uplink channel.

For example, the lower the value of the CORESET pool index, the higher the priority of the corresponding signal, and thus in the first CSI and the uplink channel, the one associated with a larger CORESET pool index is discarded.

3) When the uplink channel is the PUCCH or PUSCH carrying a second CSI, the priorities of the first CSI and the uplink channel are determined according to the CORESET pool index associated with the first CSI and the CORESET pool index associated with the uplink channel.

For example, the lower the value of the CORESET pool index, the higher the priority of the corresponding signal, and thus in the first CSI and the uplink channel, the one associated with a larger CORESET pool index is discarded.

### Method 3

If the CORESET pool index associated with the first CSI is different from the CORESET pool index associated with the uplink channel, the terminal device reports the first CSI in the time domain resource unit when it is agreed to transmit the first CSI, or discard the first CSI when it is agreed to transmit the uplink channel.

In other words, the terminal device and the network device may agree in advance upon which signal to be transmitted when a resource conflict occurs between the first CSI and the uplink channel, thereby discarding the other signal.

### Method 4

If the CORESET pool index associated with the first CSI is different from the CORESET pool index associated with the uplink channel, the terminal device determines whether to report or discard the first CSI according to the received indication information that is used for indicating whether to multiplex transmission.

The indication information may be indicated to the terminal device through RRC signaling, for example, and is used to indicate to the terminal device whether the uplink signals associated with different CORESET pool indices can be multiplexed for transmission.

For example, if the indication information indicates that multiplexing transmission is possible, the terminal device multiplexes the first CSI with the uplink channel for transmission. For example, the first CSI and the information carried by the uplink channel, after being concatenated, are transmitted on the same PUCCH or the same PUSCH, where the first CSI and the information carried by the uplink channel can be coded independently; or the first CSI and the information carried by the uplink channel, after being jointly coded, are transmitted on the same PUCCH or the same PUSCH. The same PUCCH or the same PUSCH mentioned above may be the uplink channel.

For another example, if the indication information indicates that multiplexing transmission is not possible, the terminal device transmits one of the first CSI and the uplink channel on the time domain resource unit. For example, the terminal device can discard the signal with the lower priority of the two signals.

For another example, if the indication information indicates that the multiplexing transmission is not possible, the terminal device discards the first CSI and the uplink channel, that is, the first CSI and the uplink channel are not transmitted on the time domain resource unit. In other words, if the indication information indicates that the multiplexing transmission is not possible, the terminal does not expect the first CSI and the uplink signal to be configured in the same time domain resource unit. If this situation occurs, the terminal device can treat this situation as an error case, and no processing is performed, that is, neither signal is transmitted.

In this embodiment, the network device may configure the indication information for indicating whether to perform multiplexing according to the backhaul situation. For example, the indication information indicates that the terminal device is allowed to multiplex the two signals when the backhaul is ideal, and indicates that multiplexing transmission is not allowed when the backhaul is not ideal, thereby avoiding that information is discarded in the ideal backhaul.

### Method 5

If the CORESET pool index associated with the first CSI is different from the CORESET pool index associated with the uplink channel, the terminal device transmits the first CSI and the uplink channel through different antenna panels, respectively.

Optionally, the method further includes: the terminal device determines the antenna panel used to transmit the first CSI according to the CORESET pool index associated with the first CSI, and determines the antenna panel used to transmit the uplink channel according to the CORESET pool index associated with the uplink channel.

For example, each CORESET pool index can correspond to at least one SRS resource set. The terminal device determines the corresponding SRS resource set according to the CORESET pool index associated with the first CSI, and uses the antenna panel that is used to transmit the SRS resource set to transmit the first CSI. That is, the antenna panel that transmits the first CSI is the antenna panel that transmits the SRS resource corresponding to the CORESET pool index associated with the first CSI.

Similarly, the terminal device determines the corresponding SRS resource set according to the CORESET pool index associated with the uplink channel, and uses the antenna panel that is used to transmit the SRS resource set to transmit the uplink channel. That is, the antenna panel that transmits the uplink channel is the antenna panel that transmits the SRS resource corresponding to the CORESET pool index associated with the uplink channel.

### Method 6

If the CORESET pool index associated with the first CSI is different from the CORESET pool index associated with the uplink channel, the terminal device discards the first CSI and the uplink channel, that is, does not transmit the first CSI and the uplink channel on the time domain resource unit.

In other words, if the CORESET pool index associated with the first CSI is different from the CORESET pool index associated with the uplink channel, the terminal device does not expect the first CSI and the uplink channel to be transmitted on the same time domain resource unit. When the network device schedules the data transmission of the terminal device, it should avoid that the first CSI and the uplink channel that are associated with different CORESET pool indices are transmitted on the same time domain resource unit. If this situation occurs, the terminal device will treat this situation as an error case and no process is performed, that is, neither signal will be transmitted.

It can be seen that in the above-mentioned several methods for processing the first CSI, since the first CSI is associated with the CORESET pool index, the CSIs corresponding to different TRPs can be distinguished through the CORESET pool index, and when the resource conflicts occur between the CSI and other uplink channels, the terminal device can adopt a suitable conflict resolution method, thereby realizing the effective transmission of CSI and the other uplink channels. For example, when the CORESET pool index associated with the first CSI is the same as the CORESET pool index associated with the uplink channel, it can be considered that the first CSI and the uplink channel correspond to the same TRP, thereby avoiding signal discarding by multiplexing transmission; for another example, when the CORESET pool index associated with the first CSI is different from the CORESET pool index associated with the uplink channel, it can be considered that the first CSI and the uplink channel correspond to different TRPs, and the network device indicates to the terminal device whether multiplexing transmission is possible according to the backhaul situation, thereby avoiding the signal being discarded in the ideal backhaul.

FIG. 8 shows another possible implementation of the method shown in FIG. 6. 620 may include 622. As shown in FIG. 8, the method includes the following.

In 610, the terminal device obtains a CORESET pool index associated with first CSI.

In 622, the terminal device determines content included in the first CSI according to the CORESET pool index associated with the first CSI.

The content included in the first CSI may refer to a type of CSI information included in the first CSI, or may refer to a value of the CSI information included in the first CSI, or may refer to a calculation method of the CSI information included in the first CSI. This calculation method can be used to calculate specific values of these information. Here, the CSI information may include Rank Indication (RI), a Precoding Matrix Indicator (PMI), a Channel Quality Indicator (CQI), a CSI-RS Resource Indicator (CRI), Synchronization Signal Block Indication (SSBI), Reference Signal Receiving Power (RSRP) or the like, which is not limited in the present application.

The terminal device can determine the content included in the first CSI in the following methods.

### Method 1

The terminal device determines whether the first CSI includes RI and/or CQI according to the CORESET pool index associated with the first CSI.

For example, when the CORESET pool index associated with the first CSI is a first preset value, such as 0, the first CSI includes RI; and when the CORESET pool index associated with the first CSI is a second preset value, such as 1, the first CSI does not include RI, and includes PMI and CQI. In this case, the PMI and the CQI can be calculated based on RI included in another CSI reported, and the CORESET pool index associated with the other CSI can be the first preset value.

For another example, when the CORESET pool index associated with the first CSI is a first preset value, such as 0, the first CSI includes RI and CQI; and when the CORESET pool index associated with the first CSI is a second preset value, such as 1, the first CSI does not include RI and CQI, and only includes PMI. In this case, the PMI can be calculated based on RI included in another CSI reported, and the CORESET pool index associated with the other CSI can be the first preset value.

For another example, when the CORESET pool index associated with the first CSI is the first preset value, such as 0, the first CSI includes only RI and does not include the CQI; when the CORESET pool index associated with the first CSI is the second preset value, such as 1, the first CSI includes RI and CQI. In this case, the CQI can be calculated based on the RI in the first CSI and RI included in another CSI reported, and the CORESET pool index associated with the other CSI may be the first preset value.

### Method 2

The terminal device determines the calculation method of the PMI and/or CQI included in the first CSI according to the CORESET pool index associated with the first CSI, and thus obtain the content of the CSI according to the calculation method.

For example, when the CORESET pool index associated with the first CSI is the first preset value, such as 0, the first CSI includes RI, PMI, and CQI, and the PMI and the CQI are calculated based on the RI; when the CORESET pool index associated with the first CSI is the second preset value, such as 1, the first CSI does not include RI, and includes PMI and CQI, and in this case, the PMI and the CQI can be calculated based on the RI in the CSI associated with the CORESET pool index of the first preset value.

For another example, when the CORESET pool index associated with the first CSI is a first preset value, such as 0, the first CSI includes RI, PMI, and CQI, where the PMI is calculated based on the RI, and the CQI is calculated based on the PMI and the RI, and PMI and RI in a CSI associated with a CORESET pool index of a second preset value, such as 1; and when the CORESET pool index associated with the first CSI is the second preset value, the first CSI does not include CQI, but only includes RI and PMI, and in this case, the PMI is calculated based on the RI in the CSI.

### Method 3

The terminal device determines a value of a rank included in the first CSI in a case where a sum of the value of the rank included in the first CSI and a value of a rank included in a third CSI does not exceed a preset value, where the CORESET pool index associated with the first CSI is different from a CORESET pool index associated with the third CSI.

The preset value may be, for example, a maximum number of transmission layers that can be received by the current terminal device.

For example, the preset value may be the number of supported transmission layers reported by the terminal device when performing capability reporting; or the preset value may be the maximum number of downlink transmission layers configured by the network device through RRC signaling or the like.

In this embodiment, when the terminal device determines the value of the rank included in the first CSI, it needs to consider the limitation on the total number of transmission layers, that is, the sum of the rank values in the reported CSIs associated with different CORESET pool indices cannot exceed the preset value.

In a possible implementation, the terminal device restricts the value of the rank included in the CSI configured with the associated CORESET pool index, and does not need to restrict the value of the rank included in the CSI that is not configured with the associated CORESET pool index.

For example, if the terminal device is configured with four CSI reporting configurations, four different CSI reporting needs to be performed accordingly. CSI reporting configuration 1 and configuration 2 respectively include CORESET pool index 0 and CORESET pool index 1, while CSI reporting configuration 3 and configuration 4 do not include a CORESET pool index. When the terminal device calculates the CSI, it needs to restrict the rank values for the CSIs corresponding to the CSI reporting configuration 1 and configuration 2, that is, the sum of the rank values in these two CSIs should not exceed the preset value, and the rank values for the CSIs corresponding to the CSI report configuration 3 and configuration 4 need not be restricted.

In another possible implementation, the network device may directly indicate to the terminal device through the CSI reporting configuration whether the rank value needs to be restricted for the CSI corresponding to the CSI reporting configuration.

In this embodiment, different CORESET pool indices can be associated with different TRPs, and PDSCHs scheduled by different TRPs can be transmitted at the same time. By restricting the sum of the rank values in the CSIs of different CORESET pool indexes (or different TRPs), it can be guaranteed that the total number of the transmission layers of the PDSCHs that are simultaneously scheduled does not exceed the capability of the terminal device.

After determining the content of the first CSI, the terminal device reports the first CSI.

In addition, if the CORESET pool index associated with the first CSI is the same as the CORESET pool index associated with a fourth CSI, configurations of spatial related information of the first CSI and the fourth CSI are also the same. The spatial related information may be a beam, for example. If the first CSI and the fourth CSI correspond to the same TRP, the terminal device should use the same transmission beam to transmit the first CSI and the fourth CSI, so as to ensure better transmission performance.

It can be seen that in the above methods for determining the content of the first CSI, since the CSI is associated with the CORESET pool index, the terminal device can restrict the content of the CSI through the CORESET pool index, thereby improving the transmission performance of the CSI. For example, the reporting of the rank in the first CSI is restricted, so as to avoid that the total number of transmission layers of multiple PDSCHs scheduled by different TRPs at the same time exceeds the capability of the terminal device.

It should be noted that, under the premise of no conflict, the various embodiments and/or the technical features in various embodiments described in the present application can be combined with each other arbitrarily, and the technical solutions obtained from the combination should also fall within the protection scope of this application.

In the embodiments of the present application, the sequence numbers of the above-mentioned processes do not mean the performing order, and the performing order of the processes should be determined according to the functions and the internal logic thereof, and should not be limited in the implementations of the embodiments of the present application.

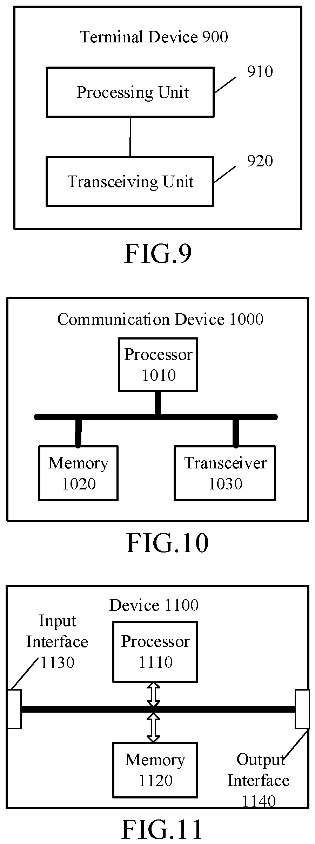

The CSI reporting methods according to the embodiments of the present application have been described above in detail. Devices according to the embodiments of the present application will be described below in conjunction with FIG. 9 to FIG. 11. The technical features described in the method embodiments are applicable to the following device embodiments.

FIG. 9 is a schematic block diagram of a terminal device 900 according to an embodiment of the present application. As shown in FIG. 9, the terminal device 900 includes a processing unit 910 and a transceiving unit 920. The processing unit 910 is configured to:
obtain a control resource set (CORESET) pool index associated with first CSI; and
process the first CSI according to the CORESET pool index associated with the first CSI.

Accordingly, by associating the CSI with the CORESET pool index and using the CORESET pool index to distinguish the CSIs corresponding to different TRPs, it is possible to effectively report the CSI, so that each TRP obtains its corresponding CSI.

Optionally, the terminal device further includes the transceiving unit 920, and the processing unit 910 is specifically configured to: control the transceiving unit 920 to receive configuration information of the first CSI, where the configuration information of the first CSI includes the CORESET pool index associated with the first CSI.

Optionally, the CORESET pool index is configured by the network device through high-level signaling.

Optionally, the processing unit 910 is specifically configured to: process the first CSI according to the CORESET pool index associated with the first CSI when a time-domain resource unit for transmitting the first CSI conflicts with a time-domain resource unit for transmitting another uplink channel.

Optionally, the processing unit 910 is specifically configured to: if the CORESET pool index associated with the first CSI is the same as the CORESET pool index associated with the uplink channel, control the transceiving unit 920 to multiplex the first CSI and the uplink channel for transmission.

Optionally, the processing unit 910 is specifically configured to: if the CORESET pool index associated with the first CSI is different from the CORESET pool index associated with the uplink channel, control the transceiving unit 920 to send the first CSI on the time domain resource unit when a priority of the first CSI is higher than a priority of the uplink channel, or to discard the first CSI when the priority of the first CSI is lower than the priority of the uplink channel.

Optionally, when the uplink channel is a physical uplink control channel PUCCH that carries hybrid automatic repeat request Acknowledge (HARQ-ACK) information, the priority of the first CSI is lower than the priority of the PUCCH; and/or, when the uplink channel is a physical uplink control channel PUSCH carrying data, the priorities of the first CSI and the PUSCH are determined according to the CORESET pool index associated with the first CSI and the CORESET pool index associated with the uplink channel; and/or, when the uplink channel is a PUCCH or PUSCH carrying a second CSI, the priorities of the first CSI and the uplink channel are determined based on the CORESET pool index associated with the first CSI and the CORESET pool index associated with the uplink channel.

Optionally, the processing unit 910 is specifically configured to: if the CORESET pool index associated with the first CSI is different from the CORESET pool index associated with the uplink channel, control the transceiving unit 920 to report the first CSI in the time domain resource unit when it is agreed to transmit the first CSI, or to discard the first CSI when it is agreed to transmit the uplink channel.

Optionally, the processing unit 910 is specifically configured to: if the CORESET pool index associated with the first CSI is different from the CORESET pool index associated with the uplink channel, process the first CSI according to indication information received by the transceiving unit 920 that is used for indicating whether to multiplex transmission or not.

Optionally, the processing unit 910 is specifically configured to: if the indication information indicates multiplexing transmission, control the transceiving unit 920 to multiplex the first CSI and the uplink channel for transmission; and/or if the indication information indicates not to multiplex transmission, control the transceiving unit 920 to transmit one of the first CSI and the uplink channel on the time domain resource unit, or discard the first CSI and the uplink channel.

Optionally, the processing unit 910 is specifically configured to: if the CORESET pool index associated with the first CSI is different from the CORESET pool index associated with the uplink channel, control the transceiving unit 920 to transmit the first CSI and the uplink channel through different antenna panels, respectively.

Optionally, the processing unit 910 is further configured to: determine an antenna panel used to transmit the first CSI according to the CORESET pool index associated with the first CSI, and determine an antenna panel used to transmit the uplink channel according to the CORESET pool index associated with the uplink channel.

Optionally, the processing unit 910 is specifically configured to: if the CORESET pool index associated with the first CSI is different from the CORESET pool index associated with the uplink channel, discard the first CSI and the uplink channel.

Optionally, the time domain resource unit is a slot, a mini-slot or an orthogonal frequency division multiplexing OFDM symbol.

Optionally, the processing unit 910 is specifically configured to determine content included in the first CSI according to the CORESET pool index associated with the first CSI.

Optionally, the processing unit 910 is specifically configured to determine whether the first CSI includes a rank indicator RI and/or a channel quality indicator CQI according to the CORESET pool index associated with the first CSI.

Optionally, the processing unit 910 is specifically configured to determine a calculation method of PMI and/or CQI included in the first CSI according to the CORESET pool index associated with the first CSI.

Optionally, the processing unit 910 is specifically configured to determine a value of a rank included in the first CSI in a case where a sum of the value of the rank included in the first CSI and a value of a rank included in a third CSI does not exceed a preset value, where the CORESET pool index associated with the first CSI is different from the CORESET pool index associated with the third CSI.

Optionally, the terminal device further includes the transceiving unit 920, and the transceiving unit 920 is configured to report the first CSI.

Optionally, if the first CSI is a non-periodically transmitted CSI, the CORESET pool index associated with the first CSI is a CORESET pool index of a CORESET where a DCI that triggers reporting of the first CSI is located, or the CORESET pool index associated with the first CSI has a same value as the CORESET pool index of the CORESET where the DCI that triggers reporting of the first CSI is located.

Optionally, if the CORESET pool index associated with the first CSI is the same as the CORESET pool index associated with a fourth CSI, configurations of spatial related information of the first CSI and the fourth CSI are also the same.

FIG. 10 is a schematic structural diagram of a communication device 1000 according to an embodiment of the present application. The communication device 1000 shown in FIG. 10 includes a processor 1010. The processor1010 can call and execute a computer program from a memory to carry out the methods in the embodiments of the present application.

Optionally, as shown in FIG. 10, the communication device 1000 can further include a memory 1020. The processor 1010 can call and run the computer program from the memory 1020 to carry out the methods in the embodiments of the present application.

The memory 1020 can be a separate device independent of the processor 1010, or can be integrated in the processor 1010.

Optionally, as shown in FIG. 10, the communication device 1000 can further include a transceiver 1030, and the processor 1010 can control the transceiver 1030 to communicate with other devices, and specifically to transmit information or data to other devices, or to receive information or data transmitted from other devices.

The transceiver 1030 can include a transmitter and a receiver. The transceiver 1030 can further include an antenna, and the number of the antennas can be one or more.

Optionally, the communication device 1000 can specifically be the terminal device in the embodiments of the present application, and the communication device 1000 can carry out the corresponding processes which are implemented by the terminal device in the methods of the embodiments of the present application, which will not be repeated here for the sake of brevity.

Optionally, the communication device 1000 can specifically be a network device in the embodiments of the present application, and the communication device 1000 can carry out the corresponding processes which are implemented by the network device in the methods of the embodiments of the present application, which will not be repeated here for the sake of brevity.

FIG. 11 is a schematic structural diagram of a device for reporting CSI according to an embodiment of the present application. The device 1100 shown in FIG. 11 includes a processor 1110, and the processor 1110 can call and run a computer program from a memory to carry out the methods in the embodiments of the present application.

Optionally, as shown in FIG. 11, the device 1100 can further include a memory 1120. The processor 1110 can call and run the computer program from the memory 1120 to carry out the methods in the embodiments of the present application.

The memory 1120 can be a separate device independent of the processor 1110, or can be integrated in the processor 1110.

Optionally, the device 1100 can further include an input interface 1130. The processor 1110 can control the input interface 1130 to communicate with other devices or chips, and specifically, to obtain information or data transmitted by other devices or chips.

Optionally, the device 1100 can further include an output interface 1140. The processor 1110 can control the output interface 1140 to communicate with other devices or chips, and specifically, to output information or data to other devices or chips.

Optionally, the device 1100 can be applied to the network device in the embodiments of the present application, and the communication device can carry out the corresponding processes which are implemented by the network device in the methods of the embodiments of the present application, which will not be repeated here for the sake of brevity.

Optionally, the device 1100 can be applied to the terminal device in the embodiments of the present application, and the communication device can carry out the corresponding processes which are implemented by the terminal device in the methods of the embodiments of the present application, which will not be repeated here for the sake of brevity.

Optionally, the device 1100 may be a chip. The chip may also be a system level chip, a system chip, a chip system, or a system-on-chip.

The processor according to the embodiments of the present application can be an integrated circuit chip with signal processing capability. In the implementations, the steps of the foregoing method embodiments can be completed by an integrated logic circuit of hardware in the processor or by instructions in a form of software. The foregoing processor can be a general-purpose processor, a Digital Signal Processor (DSP), an Application Specific Integrated Circuit (ASIC), a Field Programmable Gate Array (FPGA), other programmable logic devices, discrete gate or transistor logic device, or a discrete hardware component, which can implement the methods, steps, and logical blocks disclosed in the embodiments of the present disclosure. The general-purpose processor can be a microprocessor, any conventional processor or the like. The steps of the methods disclosed in connection with the embodiments of the present disclosure can be directly embodied in and performed by a hardware decoding processor, or can be implemented by a combination of hardware and software modules in the decoding processor. The software modules can be located in a mature storage medium in the art such as a random access memory, a flash memory, a read-only memory, a programmable read-only memory, an electrically erasable programmable memory or a register. The storage medium is located in the memory, and the processor reads information in the memory and implements the steps of the above methods in combination with the hardware thereof.

The memory in the embodiments of the present application can be a volatile memory or a non-volatile memory, or can include both the volatile and the non-volatile memories. The non-volatile memory can be a Read-Only Memory (ROM), a Programmable ROM (PROM), an erasable PROM (EPROM), an electrically EPROM (EEPROM) or a flash memory. The volatile memory may be a Random Access Memory (RAM), which is used as an external cache. By way of exemplary but not restrictive description, many forms of RAM are available, such as a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch link DRAM (SLDRAM) ) and a Direct Rambus RAM (DR RAM).

The foregoing description of the memory is exemplary rather than limiting. For example, the memory in the embodiments of the present disclosure can also be a Static RAM (SRAM), a Dynamic RAM (DRAM), a Synchronous DRAM (SDRAM), a Double Data Rate SDRAM (DDR SDRAM), an Enhanced SDRAM (ESDRAM), a Synch-Link DRAM (SLDRAM), a Direct Rambus RAM (DR RAM), among others. That is to say, the memory in the embodiments of the present disclosure is intended to include but is not limited to those and any other suitable types of memories.

The embodiments of the present application also provide a computer-readable storage medium for storing computer programs. Optionally, the computer-readable storage medium can be applied to the terminal device in the embodiments of the present application, and the computer program causes a computer to perform the corresponding process implemented by the terminal device in the methods of the embodiments of the present application, which will not be repeated here for the sake of brevity

The embodiments of the present application also provide a computer program product, including computer program instructions. Optionally, the computer program product can be applied to the terminal device in the embodiments of the present application, and the computer program instructions cause a computer to perform the corresponding process implemented by the terminal device in the methods of the embodiments of the present application, which will not be repeated here for the sake of brevity.

The embodiments of the present application also provides a computer program. Optionally, the computer program can be applied to the terminal device in the embodiments of the present application, and when running on a computer, the computer program causes the computer to perform the corresponding processes implemented by the terminal device in the methods according to the embodiments of the present application, which will not be repeated here for the sake of brevity.

The terms "system" and "network" in the embodiments of the present application are often used interchangeably herein. The term "and/or" used herein is merely to describe relative relationships of relative objects, indicating that there can be three kinds of relationships. For example, A and/or B can indicate three cases where A exists alone, A and B exist concurrently, or B exists alone. In addition, the character "/" used herein generally indicates that the related objects before and after this character are in an "or" relationship.

In the embodiments of the present invention, "A corresponding to B" means that Ais associated with B, and A can be determined from B. However, it should also be understood that determining A from B does not mean that A is determined only from B, and A can also be determined from B and/or other information.

Those of ordinary skill in the art can recognize that the exemplary units and algorithm steps described in connection with the embodiments disclosed herein can be implemented in electronic hardware or a combination of computer software and the electronic hardware. Whether these functions are implemented in hardware or in software depends on the specific applications of the technical solutions and design constraints. Various methods can be used by professional technicians to implement the described functions for each specific application, and such implementations should not be considered as going beyond the scope of the present application.

Those skilled in the art can clearly understand that for convenience and conciseness of the description, for the specific operating process of the systems, devices and units described above, reference can be made to corresponding processes in the foregoing method embodiments, which will not be repeated here.

According to the embodiments provided in the present application, it should be understood that the systems, devices, and methods disclosed can be implemented in other manners. For example, the device embodiments described above are merely illustrative. For example, division of the units is only a logical function division, and in actual implementations, there can be other division manners. For example, a plurality of units or components can be combined or integrated into another system, or some features can be ignored or not implemented. In addition, the coupling or direct coupling or communication connection shown or discussed herein can also be indirect coupling or communication connection through some interfaces, devices or units, and can be in electrical, mechanical or other forms.

The units described as separate components may be or may not be physically separated, and the components shown as units may be or may not be physical units, that is, they may be located in one place or may be distributed on multiple network units. Some or all of the units can be selected to achieve the objectives of the solutions of the embodiments according to actual requirements.

In addition, the functional units in the embodiments of the present disclosure can be integrated into one processing unit, or each of the units can individually exist physically, or two or more of the units can be integrated into one unit.

If implemented in the form of software functional units and sold or used as an independent product, the functions can be stored in a computer-readable storage medium. Based on such understanding, the technical solution of the present disclosure essentially, a part thereof that contributes to the prior art, or a part of the technical solution can be embodied in the form of a software product, and the computer software product is stored in a storage medium and includes instructions which cause a computer device (which may be a personal computer, a server, a network device or the like) to perform all or part of the steps of the methods described in the embodiments of the present disclosure. The foregoing storage medium includes various medium such as a USB drive, a removable hard disk, a ROM, a RAM, a magnetic disk or an optical disc that can store program codes.

Those described above are only specific implementations of the present application, and the protection scope of the present application is not limited thereto. Any alteration or replacement readily devised by a person skilled in the art within the technical scope disclosed in the present disclosure shall fall within the scope of the present application. Therefore, the protection scope of the present application shall be subject to the protection scope of the claims.

## Claims

1. A method for reporting channel state information, CSI, comprising:
obtaining, by a terminal device, a control resource set, CORESET, pool index associated with first CSI; and
processing the first CSI by the terminal device according to the CORESET pool index associated with the first CSI.

2. The method according to claim 1, wherein the obtaining, by the terminal device, the CORESET pool index associated with the first CSI comprises:
receiving, by the terminal device, configuration information of the first CSI, wherein the configuration information of the first CSI comprises the CORESET pool index associated with the first CSI.

3. The method according to claim 1 or 2, wherein the CORESET pool index is configured by a network device through high-level signaling.

4. The method according to any one of claims 1 to 3, wherein the processing the first CSI by the terminal device according to the CORESET pool index associated with the first CSI comprises:
processing the first CSI by the terminal device according to the CORESET pool index associated with the first CSI when a time domain resource unit for transmitting the first CSI conflicts with a time domain resource unit for transmitting another uplink channel.

5. The method according to claim 4, wherein the processing the first CSI by the terminal device according to the CORESET pool index associated with the first CSI comprises:
multiplexing, by the terminal device, the first CSI and the uplink channel for transmission in a case where the CORESET pool index associated with the first CSI is the same as a CORESET pool index associated with the uplink channel.

6. The method according to claim 4, wherein the processing the first CSI by the terminal device according to the CORESET pool index associated with the first CSI comprises:
sending, by the terminal device, the first CSI on the time domain resource unit when a priority of the first CSI is higher than a priority of the uplink channel, or discarding the first CSI by the terminal device when the priority of the first CSI is lower than the priority of the uplink channel, in a case where the CORESET pool index associated with the first CSI is different from a CORESET pool index associated with the uplink channel.

7. The method according to claim 6, wherein when the uplink channel is a physical uplink control channel, PUCCH, that carries hybrid automatic repeat request acknowledge, HARQ-ACK, information, the priority of the first CSI is lower than the priority of the PUCCH; and/or
when the uplink channel is a physical uplink control channel, PUSCH, that carries data, priorities of the first CSI and the PUSCH are determined according to the CORESET pool index associated with the first CSI and the CORESET pool index associated with the uplink channel; and/or
when the uplink channel is the PUCCH or PUSCH carrying a second CSI, the priorities of the first CSI and the uplink channel are determined according to the CORESET pool index associated with the first CSI and the CORESET pool index associated with the uplink channel.

8. The method according to claim 4, wherein the processing the first CSI by the terminal device according to the CORESET pool index associated with the first CSI comprises:
reporting, by the terminal device, the first CSI in the time domain resource unit when it is agreed to transmit the first CSI, or discarding the first CSI by the terminal device when it is agreed to transmit the uplink channel, in a case where the CORESET pool index associated with the first CSI is different from a CORESET pool index associated with the uplink channel.

9. The method according to claim 4, wherein the processing the first CSI by the terminal device according to the CORESET pool index associated with the first CSI comprises:
processing the first CSI by the terminal device according to received indication information used for indicating whether to multiplex transmission, in a case where the CORESET pool index associated with the first CSI is different from a CORESET pool index associated with the uplink channel.

10. The method according to claim 9, wherein the processing the first CSI by the terminal device according to the received indication information used for indicating whether to multiplex transmission comprises:
multiplexing, by the terminal device, the first CSI and the uplink channel for transmission in a case where the indication information indicates multiplexing transmission; and/or
sending, by the terminal device, one of the first CSI and the uplink channel on the time domain resource unit, or discarding the first CSI and the uplink channel by the terminal device, in a case where the indication information indicates not to multiplex transmission.

11. The method according to claim 4, wherein the processing the first CSI by the terminal device according to the CORESET pool index associated with the first CSI comprises:
sending, by the terminal device, the first CSI and the uplink channel respectively through different antenna panels in a case where the CORESET pool index associated with the first CSI is different from a CORESET pool index associated with the uplink channel.

12. The method according to claim 11, further comprising:
determining an antenna panel used to transmit the first CSI by the terminal device according to the CORESET pool index associated with the first CSI, and determining an antenna panel used to transmit the uplink channel by the terminal device according to the CORESET pool index associated with the uplink channel.

13. The method according to claim 4, wherein the processing the first CSI by the terminal device according to the CORESET pool index associated with the first CSI comprises:
discarding the first CSI and the uplink channel by the terminal device in a case where the CORESET pool index associated with the first CSI is different from a CORESET pool index associated with the uplink channel.

14. The method according to any one of claims 4 to 13, wherein the time domain resource unit is a slot, a mini slot, or an orthogonal frequency division multiplexing, OFDM, symbol.

15. The method according to any one of claims 1 to 3, wherein the processing the first CSI by the terminal device according to the CORESET pool index associated with the first CSI comprises:
determining content included in the first CSI by the terminal device according to the CORESET pool index associated with the first CSI.

16. The method according to claim 15, wherein the determining the content included in the first CSI by the terminal device according to the CORESET pool index associated with the first CSI comprises:
determining, by the terminal device according to the CORESET pool index associated with the first CSI, whether the first CSI includes a Rank Indicator, RI, and/or a Channel Quality Indicator, CQI; and/or
determining, by the terminal device according to the CORESET pool index associated with the first CSI, a calculation method for a Precoding Matrix Indicator, PMI, and/or the CQI included in the first CSI; and/or
determining, by the terminal device, a value of a rank included in the first CSI in a case where a sum of the value of the rank included in the first CSI and a value of a rank included in a third CSI does not exceed a preset value, wherein the CORESET pool index associated with the first CSI is different from a CORESET pool index associated with the third CSI.

17. The method according to claim 15 or claim 16, further comprising:
reporting the first CSI by the terminal device.

18. The method according to any one of claims 1 to 17, wherein in a case where the first CSI is non-periodically transmitted CSI, the CORESET pool index associated with the first CSI is a CORESET pool index of a CORESET where DCI that triggers reporting of the first CSI is located, or the CORESET pool index associated with the first CSI has a same value as the CORESET pool index of the CORESET where the DCI that triggers reporting of the first CSI is located.

19. The method according to any one of claims 1 to 18, wherein in a case where the CORESET pool index associated with the first CSI is the same as a CORESET pool index associated with a fourth CSI, configurations of spatial related information of the first CSI and the four CSI are also the same.

20. A terminal device, comprising:
a processing unit, configured to obtain a CORESET pool index associated with first CSI,
wherein the processing unit is further configured to process the first CSI according to the CORESET pool index associated with the first CSI.

21. The terminal device according to claim 20, wherein the terminal device further comprises a transceiving unit, and the processing unit is specifically configured to:
control the transceiving unit to receive configuration information of the first CSI, wherein the configuration information of the first CSI comprises the CORESET pool index associated with the first CSI.

22. The terminal device according to claim 20 or 21, wherein the CORESET pool index is configured by a network device through high-level signaling.

23. The terminal device according to any one of claims 20 to 22, wherein the processing unit is specifically configured to:
process the first CSI according to the CORESET pool index associated with the first CSI when a time domain resource unit for transmitting the first CSI conflicts with a time domain resource unit for transmitting another uplink channel.

24. The terminal device according to claim 23, wherein the processing unit is specifically configured to:
control the transceiving unit to multiplex the first CSI and the uplink channel for transmission in a case where the CORESET pool index associated with the first CSI is the same as a CORESET pool index associated with the uplink channel.

25. The terminal device according to claim 23, wherein the processing unit is specifically configured to:
control the transceiving unit to send the first CSI on the time domain resource unit when a priority of the first CSI is higher than a priority of the uplink channel, or to discard the first CS when the priority of the first CSI is lower than the priority of the uplink channel, in a case where the CORESET pool index associated with the first CSI is different from a CORESET pool index associated with the uplink channel.

26. The method according to claim 25, wherein when the uplink channel is a physical uplink control channel, PUCCH, that carries hybrid automatic repeat request acknowledge, HARQ-ACK, information, the priority of the first CSI is lower than a priority of the PUCCH; and/or
when the uplink channel is a physical uplink control channel, PUSCH, that carries data, priorities of the first CSI and the PUSCH are determined according to the CORESET pool index associated with the first CSI and the CORESET pool index associated with the uplink channel; and/or
when the uplink channel is the PUCCH or PUSCH carrying a second CSI, the priorities of the first CSI and the uplink channel are determined according to the CORESET pool index associated with the first CSI and the CORESET pool index associated with the uplink channel.

27. The terminal device according to claim 23, wherein the processing unit is specifically configured to:
control the transceiving unit to report the first CSI in the time domain resource unit when it is agreed to transmit the first CSI, or to discard the first CSI when it is agreed to transmit the uplink channel, in a case where the CORESET pool index associated with the first CSI is different from a CORESET pool index associated with the uplink channel.

28. The terminal device according to claim 23, wherein the processing unit is specifically configured to:
process the first CSI according to indication information received by the transceiving unit that is used for indicating whether to multiplex transmission, in a case where the CORESET pool index associated with the first CSI is different from a CORESET pool index associated with the uplink channel.

29. The terminal device according to claim 28, wherein the processing unit is specifically configured to:
control the transceiving unit to multiplex the first CSI and the uplink channel for transmission in a case where the indication information indicates multiplexing transmission; and/or
control the transceiving unit to send one of the first CSI and the uplink channel on the time domain resource unit or to discard the first CSI and the uplink channel, in a case where the indication information indicates not to multiplex transmission.

30. The terminal device according to claim 23, wherein the processing unit is specifically configured to:
control the transceiving unit to send the first CSI and the uplink channel respectively through different antenna panels in a case where the CORESET pool index associated with the first CSI is different from a CORESET pool index associated with the uplink channel.

31. The terminal device according to claim 30, wherein the processing unit is further configured to:
determine an antenna panel used to transmit the first CSI according to the CORESET pool index associated with the first CSI, and determine an antenna panel used to transmit the uplink channel according to the CORESET pool index associated with the uplink channel.

32. The terminal device according to claim 23, wherein the processing unit is specifically configured to:
discard the first CSI and the uplink channel in a case where the CORESET pool index associated with the first CSI is different from a CORESET pool index associated with the uplink channel.

33. The terminal device according to any one of claims 23 to 32, wherein the time domain resource unit is a slot, a mini slot, or an orthogonal frequency division multiplexing, OFDM, symbol.

34. The terminal device according to any one of claims 20 to 22, wherein the processing unit is specifically configured to:
determine content included in the first CSI according to the CORESET pool index associated with the first CSI.

35. The terminal device according to claim 34, wherein the processing unit is specifically configured to:
determine, according to the CORESET pool index associated with the first CSI, whether the first CSI includes a Rank Indicator, RI, and/or a Channel Quality Indicator, CQI; and/or
determine, according to the CORESET pool index associated with the first CSI, a calculation method for a Precoding Matrix Indicator, PMI, and/or the CQI included in the first CSI; and/or
determine a value of a rank included in the first CSI in a case where a sum of the value of the rank included in the first CSI and a value of a rank included in a third CSI does not exceed a preset value, wherein the CORESET pool index associated with the first CSI is different from a CORESET pool index associated with the third CSI.

36. The terminal device according to claim 34 or 35, wherein the terminal device further comprises a transceiving unit, and the transceiving unit is configured to:
report the first CSI.

37. The terminal device according to any one of claims 20 to 36, wherein in a case where the first CSI is non-periodically transmitted CSI, the CORESET pool index associated with the first CSI is a CORESET pool index of a CORESET where DCI that triggers reporting of the first CSI is located, or the CORESET pool index associated with the first CSI has a same value as the CORESET pool index of the CORESET where the DCI that triggers reporting of the first CSI is located.

38. The terminal device according to any one of claims 20 to 37, wherein in a case where the CORESET pool index associated with the first CSI is the same as a CORESET pool index associated with a fourth CSI, configurations of spatial related information of the first CSI and the four CSI are also the same.

39. A terminal device comprising a processor and a memory for storing a computer program, wherein the processor is configured to call and run the computer program stored in the memory to perform the method according to any one of claims 1 to 19.

40. A device for reporting CSI, comprising a processor, wherein the processor is configured to call and run a computer program from a memory, to cause an apparatus installed with the device to perform the method according to any one of claims 1 to 19.

41. A computer-readable storage medium for storing a computer program that causes a computer to perform the method according to any one of claims 1 to 19.

42. A computer program product comprising computer program instructions that cause a computer to perform the method according to any one of claims 1 to 19.

43. A computer program that causes a computer to perform the method according to any one of claims 1 to 19.
